**Europäisches Patentamt**

**European Patent Office**

**Office européen des brevets**

(19)

(11) Veröffentlichungsnummer : **0 394 851 B1**

(12) **EUROPÄISCHE PATENTSCHRIFT**

(45) Veröffentlichungstag der Patentschrift :
**08.07.92 Patentblatt 92/28**

(51) Int. Cl.⁵ : **A01G 3/02**

(21) Anmeldenummer : **90107489.8**

(22) Anmeldetag : **19.04.90**

(54) **Schere für den Wein-, Obst-und Gartenbau.**

(30) Priorität : **25.04.89 DE 3913583**

(43) Veröffentlichungstag der Anmeldung :
**31.10.90 Patentblatt 90/44**

(45) Bekanntmachung des Hinweises auf die
Patenterteilung :
**08.07.92 Patentblatt 92/28**

(84) Benannte Vertragsstaaten :
**AT CH DE GB GR IT LI**

(56) Entgegenhaltungen :
**DE-A- 2 801 254**
**DE-C- 529 470**
**DE-C- 916 390**
**US-A- 2 294 832**

(73) Patentinhaber : **Schröder, Uwe**
**Konsul-Lieder-Allee 5**
**W-2305 Heikendorf (DE)**

(72) Erfinder : **Schröder, Uwe**
**Konsul-Lieder-Allee 5**
**W-2305 Heikendorf (DE)**

(74) Vertreter : **Tönnies, Jan G., Dipl.-Ing.**
**Niemannsweg 133**
**W-2300 Kiel 1 (DE)**

Jouve, 18, rue Saint-Denis, 75001 PARIS

**Beschreibung**

Die Erfindung betrifft eine Schere für den Wein-, Obstund Gartenbau mit einem aus einem ersten Griffstück und einer an dieses angesetzten Klinge bestehenden Messerhebel, einem aus einem zweiten Griffstück und einer von diesem getragenen Gegenklinge oder Amboß bestehenden Unterlagenhebel, einem den Messerhebel mit dem Unterlagenhebel verbindenden und die Klinge tragenden, Gewindebolzen der durch Bohrungen in dem Messerhebel, dem Unterlagenhebel und der Klinge geführt ist, und einer auf dem Gewindebolzen aufsitzenden Gewindemutter, wie sie - in der Ausführungsform als Amboßschere - aus der DE-PS 36 31 554 bekannt ist.

Bei den bekannten Scheren, bei denen die Klinge auf einem den Messerhebel mit dem Unterlagenhebel zueinander verschwenkbar verbindenden Gewindebolzen aufgesetzt ist, kann die Klinge nur bei Demontage von Messerhebel und Unterlagenhebel voneinander ausgewechselt werden. Erfahrungsgemäß macht dem Verwender das erforderliche erneute Zusammensetzen von Messerhebel und Unterlagenhebel Probleme: Bei zu starkem Anziehen der Gewindemutter auf den Gewindebolzen wird die Reibung zwischen Messerhebel und Unterlagenhebel zu hoch, bei zu wenig festem Anziehen hat die Klinge zu wenig Halt.

Der Erfindung liegt die Aufgabe zugrunde, die Schere der eingangs genannten Art derart weiterzubilden, daß ein Auswechseln der Klinge auch ohne Demontage von Messerhebel und Unterlagenhebel voneinander möglich ist.

Erfindungsgemäß wird diese Aufgabe dadurch gelöst, daß die Klinge seitlich an die dem Unterlagenhebel abgewandte Seite des Messerhebels angesetzt ist, die Bohrung in dem Messerhebel mit einem mit dem Gewindebolzen schraubenden Gewinde versehen ist, die Gewindemutter unmittelbar auf die dem Unterlagenhebel abgewandte Seite der Klinge wirkt, und eine auf der dem Unterlagenhebel abgewandten Seite des Messerhebels aufsitzende, den Gewindebolzen in dem Messerhebel konternde Gewindehülse vorgesehen ist.

Eine bevorzugte Ausführungsform zeichnet sich dadurch aus, daß der Außendurchmesser der Gewindehülse dem Innendurchmesser der Bohrung der Klinge entspricht.

Weiter wird die Vorsehung einer an den Messerhebel angesetzten, auf das hintere Ende der mit dem Messerhebel nur reibschlüssig verbundenen Klinge wirkende Stellschraube vorgeschlagen.

Die Erfindung wird im folgenden anhand einer Zeichnung erläutert. Dabei zeigt:

Fig. 1 eine Seitenansicht einer mit einem Amboß versehenen Schere,

Fig. 2 eine Schnittdarstellung entlang der Linie II-II von Figur 1, und

Fig. 3 eine Seitenansicht einer mit einer Gegenklinge versehenen Schere.

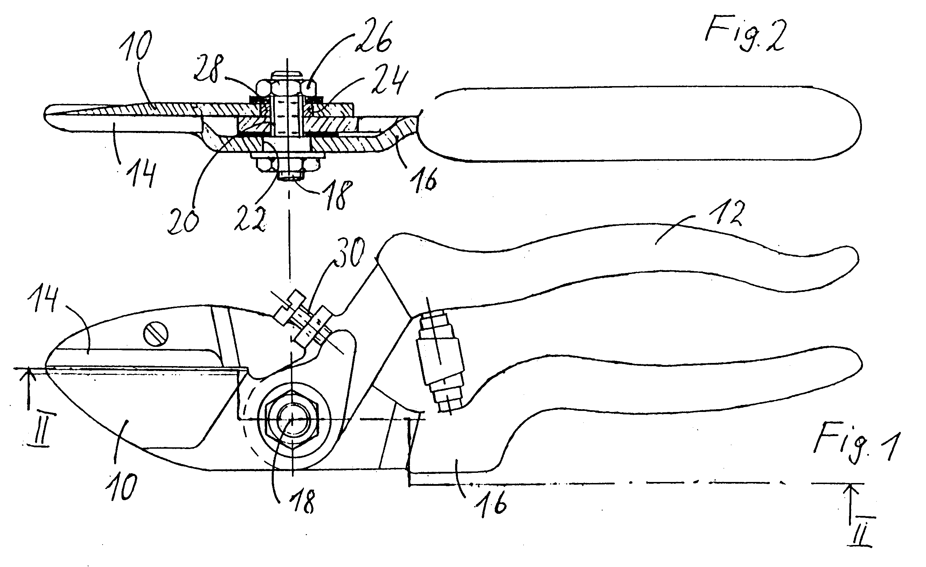

Die in der Fig. 1 und 2 dargestellte Amboßschere wird aus einem ersten Griffstück und einer an dieses angesetzten Klinge 10 bestehenden Messerhebel 12 sowie einem aus einem zweiten Griffstück und einem von diesem getragenen Amboß 14 bestehenden Unterlagenhebel 16 gebildet.

Messerhebel 12 und Unterlagenhebel 16 werden durch einen Gewindebolzen 18 zueinander verschwenkbar miteinander verbunden, wobei der Gewindebolzen 18 auch die Klinge 10 trägt. Der Gewindebolzen 18 ist durch Bohrungen 20, 22, 24 in dem Messerhebel 12, dem Unterlagenhebel 16 und der Klinge 10 geführt.

Während die Bohrung 22 in dem Unterlagenhebel 16 ein freies Passieren des Gewindebolzens 18 erlaubt, ist die Bohrung 20 in dem Messerhebel 12 als mit dem Gewindebolzen 18 schraubende Gewindebohrung ausgebildet.

Der Gewindebolzen 18 ist bis zu der glatten Fläche, auf der der Unterlagenhebel 16 mit seiner Bohrung 22 ruht, in den Messerhebel 12 einschraubbar.

Der Unterlagenhebel 16 wird an seiner dem Messerhebel 12 abgewandten Seite von dem Bolzenende des Gewindebolzens oder einer Mutter 19 gekontert. Bei Verwendung einer Mutter 19 ist an dem Gewindebolzen 19 ein Ansatz zum Angreifen eines Werkzeugs, z.B. eines Schraubenziehers, vorgesehen.

Die Bohrung 24 in der Klinge 10 erlaubt wiederum ein freies Passieren des Gewindebolzens 18.

Die Klinge 10 ist seitlich an die dem Unterlagenhebel 16 abgewandte Seite des Messerhebels 12 an den Messerhebel 12 angesetzt, eine mit dem Gewindebolzen 18 schraubende Gewindemutter 26 wirkt unmittelbar auf die dem Unterlagenhebel 16 abgewandte Seite der Klinge 10.

Eine mit dem Gewindebolzen 18 schraubende Gewindehülse 28 setzt auf der dem Unterlagenhebel 16 abgewandten Seite des Messerhebels 12 auf und kontert diese.

Weiter ist an den Messerhebel 12 eine Stellschraube 30 angesetzt, die auf das hintere Ende der mit dem Messerhebel 12 reibschlüssig verbundenen Klinge 10 angesetzt. Die Stellschraube entspricht in ihrer Funktion derjenigen nach der DE-PS 36 31 554, auf eine weitere Erläuterung wird daher verzichtet.

Wesentliches Merkmal der hier vorgeschlagenen Schere ist das Ansetzen der Klinge 10 außen seitlich an den Messerhebel 12, so daß die Klinge 10 nach Abschrauben der Gewindemutter 26 ausgewechselt werden kann. Bei Lösen der Gewindemutter 26 bleibt die Verbindung zwischen dem Messerhebel 12 und dem Unterlagenhebel 16 unberührt, da der Gewindebolzen 18 mit der Gewindebohrung in dem Messerhebel 12 schraubt und von der (bei dem Auswechseln der Klinge nicht zu lösenden) Gewindehülse 28 gekontert wird. Ein erneutes Einstellen des Reibschlusses zwischen dem Messerhebel 12 und dem Unterlagenhebel 16 bei Auswechseln der Klinge 10 ist daher nicht erforderlich.

Die Gewindehülse 28 dient zunächst zum Kontern des in die Gewindebohrung in dem Messerhebel 12 eingeschraubten Gewindebolzen 18. Sie lagert jedoch weiter die Klinge 10. Bei Verzicht auf die Stellschraube 30 können die Gewindehülse 28 und die Ausnehmung in der Klinge 10 auch unrund ausgebildet sein. Bei der bei dem bevorzugten Ausführungsbeispiel vorgesehenen Möglichkeit der Verstellung der Klinge 10 relativ zu dem Messerhebel 12 ist die Ausnehmung in der Klinge 10 als Bohrung 24 ausgebildet, wobei der Außendurchmesser der Gewindehülse 28 dem Innendurchmesser der Bohrung 24 entspricht, jedoch mit Ansätzen zum Angreifen eines Werkzeugs versehen ist.

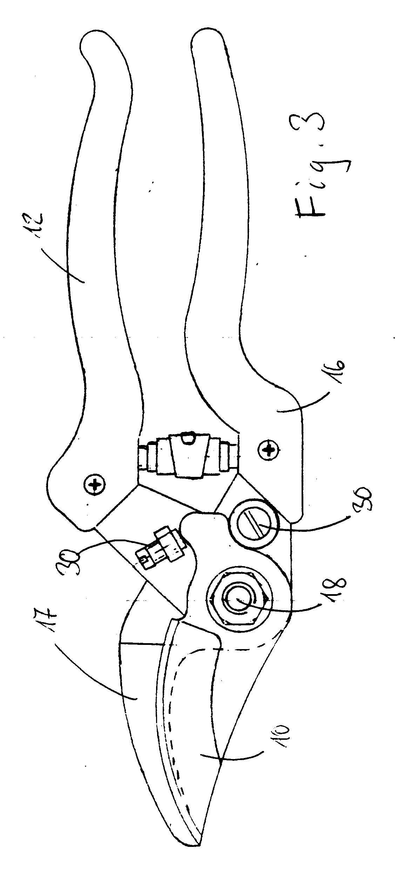

In Fig. 3 ist die Schere statt mit einem Amboß, mit einer Gegenklinge versehen. An dem Unterlagenhebel 16 ist ein Stopper 30 im Bereich der Verbindung des Messerhebels 12 mit dem Unterlagenhebel 16 befestigt, der beim Schließen der Schere, nachdem beide Klingen aneinander vorbei geglitten sind, und bevor beide Hebel im Bereich der Griffhand in Berührung kommen, so mit der Klinge 10 Kontakt bekommt, daß die Bewegung gestoppt wird. Dazu kann die Klinge noch mit einer entsprechenden Stoppe-raufnahme versehen werden.

Vorzugsweise ist der Stopper neben einem Schraubenkern mit einem elastischen Überzug versehen, um das Abstoppen abfedernd zu gestalten.

**Patentansprüche**

1. Schere für den Wein-, Obst- und Gartenbau mit
– einem aus einem ersten Griffstück und einer an dieses angesetzten Klinge (10) bestehenden Messerhebel (12),
– einem aus einem zweiten Griffstück und einer von diesem getragenen Gegenklinge oder Amboß (14) bestehenden Unterlagenhebel (16),
– einem den Messerhebel (12) und den Unterlagenhebel (16) miteinander zueinander verschwenkbar verbindenden und die Klinge (10) tragenden Gewindebolzen (18), der durch Bohrungen (20, 22, 24) in dem Messerhebel (12), dem Unterlagenhebel (16) und der Klinge (10) geführt ist, und
– einer auf dem Gewindebolzen (18) aufsitzenden Gewindemutter (26), dadurch gekennzeichnet, daß

– die Klinge (10) seitlich an die dem Unterlagenhebel (16) abgewandte Seite des Messerhebels (12) angesetzt ist,
– die Bohrung (20) in dem Messerhebel (12) mit einem mit dem Gewindebolzen (18) schraubenden Gewinde versehen ist,
– die Gewindemutter (26) unmittelbar auf die dem Unterlagenhebel (16) abgewandte Seite der Klinge (10) wirkt, und
– eine auf der dem Unterlagenhebel (16) abgewandten Seite des Messerhebels (12) aufsitzende, den Gewindebolzen (18) in dem Messerhebel (12) konternde Gewindehülse (28) vorgesehen ist

2. Schere nach Anspruch 1, dadurch gekennzeichnet, daß der Außendurchmesser der Gewindehülse (28) dem Innendurchmesser der Bohrung (24) in der Klinge (10) entspricht.

3. Schere nach Anspruch 1 und Anspruch 2, gekennzeichnet durch eine an den Messerhebel (12) angesetzte, auf das hintere Ende der mit dem Messerhebel (12) nur reibschlüssig verbundenen Klinge (10) wirkende Stellschraube (30).

4. Schere nach einem der vorangehenden Ansprüche, dadurch gekennzeichnet, daß die Schere eine Amboßschere ist.

5. Schere nach einem der vorangehenden Ansprüche, dadurch gekennzeichnet, daß bei Ausbildung der Schere mit einer Gegenklinge (17) am Unterlagenhebel (16) ein Stopper (30) im Bereich der Verbindung des Messerhebels (12) mit dem Unterlagenhebel (16) vorgesehen ist.

**Claims**

1. Secateurs for wine culture, fruit culture and horticulture with a knife lever (12)
– comprising a first handle and a blade (10) fitted to the latter, a support lever (16)
– comprising a second handle and a opposite blade or anvil (149 carried by the latter, the blade (10) being fitted laterally to the side of the knife lever (12) remote from the support lever (16),
– a threaded bolt (18) connecting the knife lever (12) and the support lever (16) so as to pivotable relative to one another and carrying the blade (10) and which is guided through bores (20, 22, 24) in the knife lever (12), the support lever (16) and the blade (10) and a threaded nut (26) resting on the threaded bolt (18), characterized in that

– the bore (20) is provided in the knife lever (12) with a threaded screwing with the threaded bolt (18),
– the threaded nut (26) acts directly on the side of the blade (10) remote from the support lever (16) and
– a threaded sleeve (18) is provided resting on the side of the knife lever (12) remote from the support lever (16)
– and locking the threaded bolt (18) in the knife lever (12).

2. Secateurs according to claim 1, characterized in that the external diameter of the threaded sleeve (28) corresponds to the internal diameter of the bore (24) in the blade (10).

3. Secateurs according to claims 1 and 2, characterized by a setscrew (30) fitted to the knife lever (12) and acting on the rear end of the blade (10) only connected by frictional engagement with the knife lever (12).

4. Secateurs according to one of the preceding claims, characterized in that the secateurs are anvil secateurs.

5. Secateurs according of the preceding claims, characterized in that when constructing the secateurs with a opposite blade (17) on the support lever (16) a stopper (30) is provided in the vicinity of the connection of the knife lever (12) to the support lever (16).

**Revendications**

1. Des ciseaux pour la viticulture, l'arboriculture fruitière et la horticulture avec
– un levier de couteau (12) se composant d'un premier manche et d'une lame (10) jointe à ce manche,
– un levier de support (16) se composant d'un second manche et d'une lame opposée ou d'une enclume (14) portée par ce manche,
– un boulon fileté (18) mené par des alésages (20, 22, 24) dans le levier de couteau (12), dans le levier de support (16) et dans la lame (10), portant la lame (10) et joignant le levier de couteau (12) et le levier de support (16) de manière au'ils puissent être articulés l'un envers l'autre, et
– un écrou (26) disposé sur le boulon fileté caractérisés par le fait que

– la lame (10) est jointe latéralement au côté du levier de couteau (12) détourné du levier de support (16),
– l'alésage (20) dans le levier de couteau (12) est muni d'un filet vissant avec le boulon fileté (18),
– l'écrou (26) opère directement sur le côté de la lame (10) détourné du levier de support (16),
– une douille filetée (28) mise sur le côté du levier de couteau (12) détourné du levier de support (16), vissant en sens opposé (comme un contre-écrou) le boulon fileté (18) dans le levier de couteau (12),

2. Des ciseaux d'après la revendication numéro 1, caractérisés par le fait que le diamètre extérieur de la douille filetée (28) équivaut le diamètre intérieur de l'alésage (24) dans la lame (10).

3. Des ciseaux d'après la revendication numéro 1 et la revendication numéro 2, caractérisés par une vis de réglage (30) jointe au levier de couteau (12), opérant sur le bout arrière de la lame (10) qui est seulement à contact à friction avec le levier de couteau (12).

4. Des ciseaux d'après une des revendications préalables, caractérisés par le fait que les ciseuax sont des ciseaux d'enclume.

5. Des ciseaux d'après une des revendications préalables, caractérisés par le fait qu'au cas où les ciseaux sont construits avec une lame opposée (17) au levier de support (16) un stoppeur (30) est prévu dans la région de la jonction du levier de couteau (12) avec le levier de support (16).

Fig.2

Fig.1

Fig. 3